# EUROPEAN PATENT SPECIFICATION

(11) **EP 1 726 542 B1**
(45) Date of publication and mention of the grant of the patent: **19.03.2008**
(21) Application number: 03819088.0
(22) Date of filing: 01.12.2003
(51) Int. Cl.: B65G 47/14

(54) **ARTICLE-POSITIONING MACHINE**
ARTIKELPOSITIONIERMASCHINE
MACHINE DE POSITIONNEMENT D'ARTICLES

(43) Date of publication of application: 29.11.2006
(73) Proprietor: Martí Mercadé, Alex, 08190 Sant Cugat Del Vallés, Barcelona (ES)
(72) Inventor: Martí Mercadé, Alex, 08190 Sant Cugat Del Vallés, Barcelona (ES)
(74) Representative: Gislon, Gabriele
(86) International application number: PCT/ES2003/000612
(87) International publication number: WO 2005/054095

(56) References cited:
- DE-A1- 19 618 009
- ES-A2- 2 087 003
- US-A- 3 662 872
- US-A- 4 825 995
- US-B1- 6 435 333

## Description

### Scope of the invention

In general, this present invention concerns an article-positioning machine and more specifically, an article-positioning machine comprising the means to collect articles from a plurality of individual housings that move in a closed loop and, in at least one drop zone, allow each to drop orientated to the inside of a corresponding alignment conduit that moves with each housing adapted to position more than one article during each cycle or rotation.

### Background

Machines are habitual in various industrial sectors to position articles, which are initially disordered, in a predetermined position and aligned arrangement. Specifically, in the packaging state of the art, machines are employed to stand and order bottles or empty packets in an upright position, resting on their bases with the filling aperture at the top. Generally, said filling aperture forms a neck that constitutes a differentiated geometric configuration of the bottle or packet at the end opposite to the base, in general defining an imaginary longitudinal axis between both ends.

Patent US-A-3295659 describes a machine based on an operating principle that has converted it into the most widely used in many types of particle-positioning machines. This principle is based on the handling of the mentioned differentiated geometric configuration for standing the articles up, and consists of first placing the articles individually in housings, in a horizontal position and with the longitudinal axis of the article pre-orientated according to the direction of said housing so that the differentiated geometric configuration faces one of the other ends of the housing; then allowing the article Z to drop through the open bottom of the housing into an alignment conduit, in the mouth of which contains stop and support configurations intended to hold said differentiated geometric configuration whatever its position relative to the housing in order for the article to always drop onto its base. To accomplish this, at least one of said stop configurations is shaped so that article Z positions itself in a different manner in the alignment conduit mouth according to said relative position of the differentiated configuration so that this is always located above one of said support configurations. The machine adopts a rotating configuration in which a plurality of said cavities intended to receive an article are radially arranged on the periphery of a circular structure.

Patent US-A-3662872 describes a rotating positioning machine intended for empty lightweight bottles or packets in which a series of housing are joined to a rotating structure, arranged tangentially on the periphery of the same, around a container that receives the articles in a disordered fashion and which is fitted with the means to load a packet or bottle into each housing in a horizontal position, with its longitudinal axis pre-orientated in accordance with the tangential direction of the housing and with the neck at the front or rear part with respect to the rotation direction. Each of the cited housings has an open bottom on an alignment conduit with moves with the same. Interposed between the open housing bottoms and the respective alignment conduits is a stationary support plane, which presents two interruptions in two opposite sections of the rotating path through the interruptions of which the articles drop by gravity into the alignment conduit. In determined zones of said housings are the cited stops and supports intended to support said neck when the packet falls inside the alignment conduit via the cited interruption in the support plane, so that the packet is always in a vertical position inside the alignment conduit, with the neck at the top and the base at the bottom. Some means of deflection finally transfer the packets orientated in a vertical position from the alignment conduits to an output conveyor belt. This machine also includes a partition that vertically divides a lower zone of each alignment conduit into two equal compartments, together with a deflector plate arranged articulating with an upper end of said partition and driven by drive means to alternately change the position so that articles drop towards one or the other of said compartments. With this, the machine is able to load two articles in each alignment conduit via the same peripheral housing during one rotation.

Patent US-A-6098781 describes an empty packet positioning machine of the type described above in which the stationary support plane has various interruptions. Each housing has a corresponding upper portion of an alignment conduit that moves together with the same. Underneath the upper alignment conduit portions is a plurality of lower alignment conduit portions in a plurality that is a multiple of the plurality of upper portions and said lower portions move at a peripheral speed that is greater than the speed at which the housing and upper portions move, so that, during one rotation, several lower portions consecutively face each upper portion coinciding with one of the cited support plane interruptions. This device allows more than one packet to be aligned by each housing during one rotation. However, it has the inconvenience of the relative movement between the upper and lower portions being continuous and the useful mutual facing time to allow the packet to pass coinciding with one of the support plane interruptions is extremely short, which could lead to incorrect operation.

In addition to this, in the above-described rotating positing machines, the entrance housing and alignment conduit compartments have fixed dimensions suitable for articles of just one size. In order to adapt the machine to articles of various sizes, it would be necessary to replace the said housings and alignment conduits; among other elements, which would represent a high cost in time for the replacement operation, higher investment in manufacturing the alternative elements, together with higher storage costs for said elements.

Patent US-A-6435333 from the same applicant describes a rotating machine that obeys the same principle, although with a single interruption in the support plane and a single space inside the alignment conduit. However, this machine is adapted to adjust to the handling of bottles or packets of several sizes through the incorporation of the means to move the stops and supports located in the housings and intended for supporting the packet neck when it falls into the alignment conduit side walls and other elements intended for adjusting the machine to articles of various sizes. All these moving elements for the housings and alignment conduits are moved at the same time by an angular movement relative to a circular, coaxial substructure to which said moving elements are fixed.

One objective of the present invention is that of providing an article-positioning machine based on the cited principle of allowing the articles drop into alignment conduits, capable of positioning more than one article in each alignment conduit during one revolution or cycle.

Another objective of the present invention is that such a machine includes the means to adjust the housings and alignment conduit to articles of various sizes.

### Disclosure of the invention

In accordance with the present invention, the previous and other objectives are achieved, producing an article-positioning machine of the type comprising the means to collect the articles in a plurality of individual housings that move in a closed circuit and, in at least one drop zone, allows the orientated articles to drop inside a corresponding alignment conduit that moves together with each housing and the means of exit to extract the orientated and aligned articles from the said conduits onto an exit conveyor belt. The machine is
characterised in that each alignment conduit comprises an upper portion for collecting the articles from the corresponding housing, at least one moving intermediate portion defining at least one conduit, and a lower portion for receiving the articles comprising at least two compartments, with a stationary support plane interposed between the intermediate and lower portions, with drive means incorporated to selectively move said intermediate portion in order to face said conduit to the upper portion and receive an article from the same, and/or face the conduit to one or other said at least two compartments of the lower portion to transfer said article Z1 through at least one interruption existing in said support plane.

In general, said closed circuit is circular or elliptical and it comprises two or more drop zones along the same, with an equal plurality of compartments in the lower portion of each alignment conduit. Thanks to this, the machine is capable of positioning two or more articles in each alignment conduit during each rotation or cycle, which provides higher productivity.

The machine of this invention can incorporate any of the known systems to orientate the articles, with some of said systems described in the above cited patents. In general, although not essential, the articles have a body with a differentiated configuration and a base, and the system uses an interaction with the said differentiated configuration to stand the article up on its base. In a specific application, the articles are empty lightweight packets and the differentiated configuration is a neck next to an aperture, and the machine is adapted to stand up and align the initially disordered and in bulk packets into the cited exit conveyor belt.

The machine of this invention can also incorporate any of the known mechanisms to adjust the size of the cavities and alignment conduits to articles of various sizes, for example, a system of moving parts, such as the one described in above-cited patent US-A-6435333.

### A brief description of the drawings

The advantages and characteristics of the invention will be more fully understood from the following detailed description of exemplary embodiments, with reference to the attached drawings, in which:
Fig. 1 is a perspective schematic view illustrating a generally circular arrangement of the alignment conduits in an article-positioning machine in accordance with the present invention;
Fig. 2 is a schematic drawing representing a linear development of the circular arrangement of the alignment conduits of Fig. 1 with different articles represented in order to illustrate different stages during one rotation or cycle;
Figs. 3 and 4 are enlargements of the schematic diagram shown in Fig. 2;
Figs. 5 and 6 are schematic rear elevation views of a housing and part of its corresponding alignment conduit, showing the drive means of the upper portion and two different possible positions of same;
Figs. 7 and 8 are schematic elevation views of a housing and its corresponding alignment conduit, showing the means to adapt the housing, the upper and lower portions to articles of various sizes in two different positions;
Figs. 9 and 10 are perspective schematic views that show the means to adapt the bottoms of the lower portion to articles of various sizes in two different positions;
Figs. 11 and 12 are schematic cross-sectional views taken along an alignment conduit that show the means to adapt the housing bottoms and of the upper intermediate and lower portions to articles of various sizes in two different positions

### Detailed descriptions of some embodiment examples

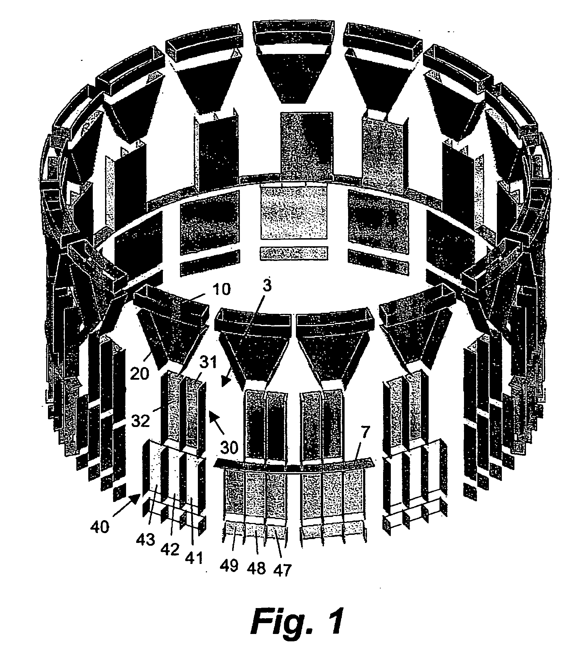

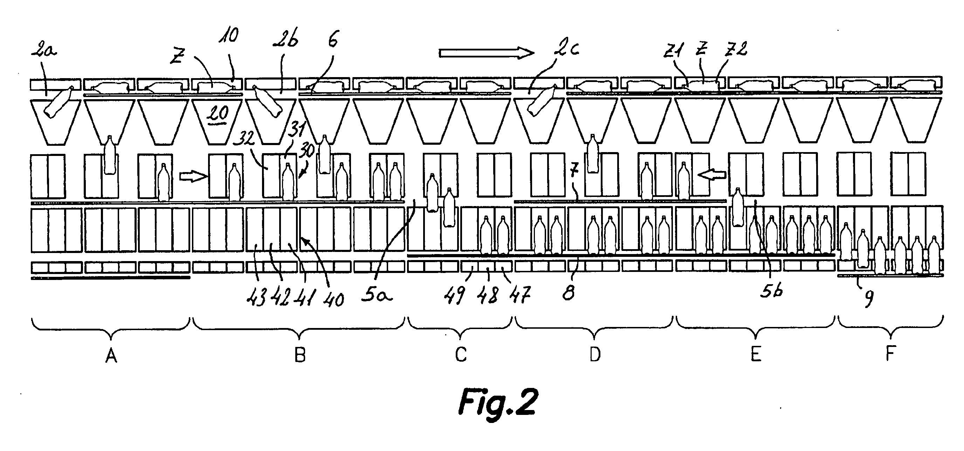

First referring to Fig. 1, this schematically shows a possible configuration for a machine in accordance with the present invention adapted for positioning articles Z in the form of empty lightweight packets (see Figs. 2 to 4) with a differentiated configuration Z1, or neck, at one end and a base Z2 at the other end, with an imaginary longitudinal axis defined between both ends. In an illustrated example, the machine has a circular configuration and comprises a fixed frame, a rotating structure and a surrounding exterior wall (not shown). In an upper peripheral zone of the rotating structure, a plurality of individual housings 10 are arranged; each one adapted to receive an article Z in a horizontal arrangement and with its longitudinal axis pre-orientated in accordance with the tangential direction the cited housing. A corresponding alignment conduit 3 is arranged underneath each housing 10 and fixed to the rotating structure, so that each alignment conduit 3 is moved together with its housing 10. Each alignment conduit 3 comprises an upper portion 20 for collecting articles Z from the corresponding housing 10, at least one intermediate moving position 30, defining a pair of conduits 31, 32 and a lower portion 40 for receiving articles Z comprising three compartments 41, 42, 43. The upper 20, intermediate 30 and lower 40 portions comprising the alignment conduits 3 have open exterior parts that are delimited by the mentioned surrounding exterior wall (not shown), which is stationary. The machine includes well-known exit means (not shown) to extract the orientated and aligned articles Z from said alignment conduits 3 onto an exit conveyor belt.

Between the housings 10 and the upper portions 20 is a separation space containing a first support plane 6 on which the articles Z are supported and slide and move inside each housing. In drop zones 2, the first support plane 6 is interrupted to allow the articles Z drop inside the corresponding upper portion 20, which has a funnel shape with an upper aperture of suitable width for the longitudinal dimension of article Z and a lower aperture of width suitable for the transversal dimension of the article Z. The intermediate portion 30 is connected to drive means 4 which are activated to selectively move said intermediate portion 30 in order to face an upper aperture of one or the other conduits 31, 32 to the lower aperture of the upper portion 20 in order to receive an article Z from same. The intermediate 30 and lower 40 portions are separate and between the same a second stationary support plane 7 is interposed on which the articles Z are supported and slide and move inside each conduit 31, 32. The cited drive means 4 can also be activated to move the intermediate portion 30 to face the lower apertures of the two conduits 31, 32 to upper apertures of two of the three compartments 41, 42, 43 of the lower portion 40 in order to transfer the article Z or articles Z from the conduits 31, 32 to the compartments 41, 42, 43 through interruptions 5a, 5b existing in said second support plane 7. Underneath the loser apertures of the compartments 41, 42, 43 is a third stationary support plane 8 on which the articles Z are supported and slide inside compartments 41, 42, 43.

Although not essential, the compartments 41, 42, 43 preferably have lower supplements 47, 48, 49 located under the third support plane 8 and above an additional fourth stationary support plane 9, on which the articles Z are supported and slide inside compartments 41, 42, 43, after which the same have descended through an interruption in the third support plane 8. The mentioned exit means (not shown) extract the orientated and aligned articles Z from said lower supplements 47, 48, 49 of the compartments 41, 42, 43 onto the cited exit conveyor belt.

In the illustrated exemplary embodiment, the selective movement of each intermediate portion 30 is transversal to the direction of drop of the articles Z along the alignment conduit 3 and comprises a return movement with stops at the ends of travel and without intermediate stops. Each stop determines the cited facing of the conduits 31, 32 with the upper portion 20 and the facing of the compartments 41, 42, 43. The second support plane 7 comprises at least two interruptions 5a, 5b because, just as explained in detail below, the filling of the three compartments 41, 42, 43 of each intermediate portion 30 is performed in two stages.

It is pointed out that the drive means 4 could be adapted to provide one or more intermediate stops in addition to the ends of travel of the cited return movement, so that an intermediate portion 30 with a single conduit could distribute articles to a lower portion 40 with three or more compartments, or an intermediate portion 30 with three or more conduits could distribute articles to a lower portion 40 with four or more compartments etc. In this case, the second support plane 7 would comprise multiple interruptions to fill the compartments in multiple stages. It must be taken into account however, that the plurality of compartments existing in each lower portion 40 is logically limited by the ratio between the longitudinal and transversal dimensions of the article Z and by the plurality of housings 10 and alignment conduits 3 existing in the length of the closed circuit. In any case, the closed circuit comprises as many drop zones 2, in other words, interruptions in the first support plane 6 associated with the housings 10, as compartments 41, 42, 43 in the lower portion 40.

In accordance with an exemplary embodiment that is not shown, the intermediate portion 30 defines a single conduit and articulates with the lower end of the upper portion 20. The drive means 4 provide, in this case, the pendular movement of the intermediate portion 30 with stops at, at least the ends of travel, with each stop determined by one of the cited facings of the lower aperture of the conduit with the upper aperture of one of the compartments 41, 42, 43, while constantly maintaining the facing of the upper aperture of the conduit of the intermediate portion 30 with the lower aperture of the upper portion 20.

In relation to Figs. 2 to 4, the procedure followed to load the three compartments 41, 42, 43 during one rotation or cycle is explained below. Fig. 2 schematically shows a linear development of the 17 housings 10 with their corresponding alignment conduits 3, which are fixed to the rotating structure of the machine as suggested by the circular layout of Fig. 1, and the rotating structure rotates in the direction indicated by an arrow 50 in Figs. 2 to 4.

In a first stage A, an article Z moving inside a housing 10 drops through a first interruption 2a of the first support plane 6 into an upper potion 20 to continue inside a first conduit 31 of the intermediate portion 30 facing, at this time, the upper portion 20. The article Z is moved together with the first conduit 31, supported on and sliding over the second support plane 7.

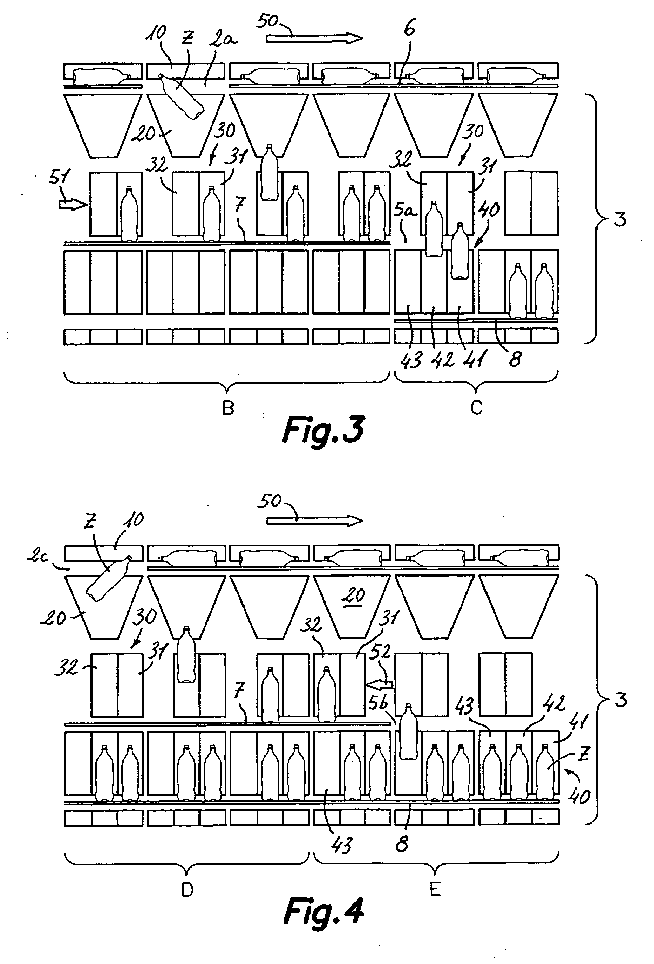

In a second stage B, better shown in Fig. 3, the drive means 4 move the intermediate portion 30 in the direction indicated by an arrow 51 to face the second conduit 32 of the intermediate portion to the upper portion 20, followed by another article Z dropping through a second interruption 2b of the first support plane 6 and through the upper portion 20 into the second conduit 32 of the intermediate portion 30. Thus, two articles Z are respectively moving with the first and second conduits 31, 32 supported on and sliding over the second support plane 7.

In a subsequent stage C, better shown in Fig. 3, a first interruption 5a in the second support plane 7 causes the transfer, by gravity, of the two articles Z from the first and second conduits 31, 32 of the intermediate portion 30 to first and second conduits 31, 32 of the lower portion 40 facing at that point the first and second conduits 31, 32. Thus, the two articles Z are respectively moving with the first and second compartments 41, 42 supported on and sliding over the third support plane 8. Now, the first and second conduits 31, 32 of the intermediate portion 30 and the third compartment 43 of the lower portion 40 are unoccupied.

Then, in a stage D, better shown in Fig. 4, an article Z moving inside a housing 10 drops through a third interruption 2c of the first support plane 6 and through an upper portion 20 inside the second conduit 31 of the intermediate portion 30, which, at this moment is facing the upper portion 20. The article Z is moved together with the second conduit 32, supported and sliding on the second support plane 7.

In a subsequent stage E, better shown in Fig. 4, the drive means 4 move the intermediate portion 30 in the direction indicated by an arrow 52 to face the second conduit 32 of the intermediate portion 30, which contains an article Z, with the still unoccupied third compartment 43, of the lower portion 40 and then, the article Z drops from the second conduit 32 to the third compartment 43 through a second interruption 5b of the second support plane 7, so that the three compartments 41, 42, 43 of the lower portion 40 are loaded with respective articles Z during one revolution. The three articles Z move together with the three compartments 41, 42, 43 supported on and sliding over the third support plane 8.

In an optional stage F, better shown in Fig. 2, the three articles Z are transferred by gravity from the three compartments 41, 42, 43 to the mentioned lower supplements 47, 48, 49 through an interruption of the third support plane 8 to be moved inside the lower supplements 47, 48, 49 supported on and sliding over the stationary fourth support plane 9, from which the exit means (not shown) extract the orientated and aligned articles Z from said lower supplements 47, 48, 49 of the compartments 41, 42, 43 onto the cited exit conveyor belt.

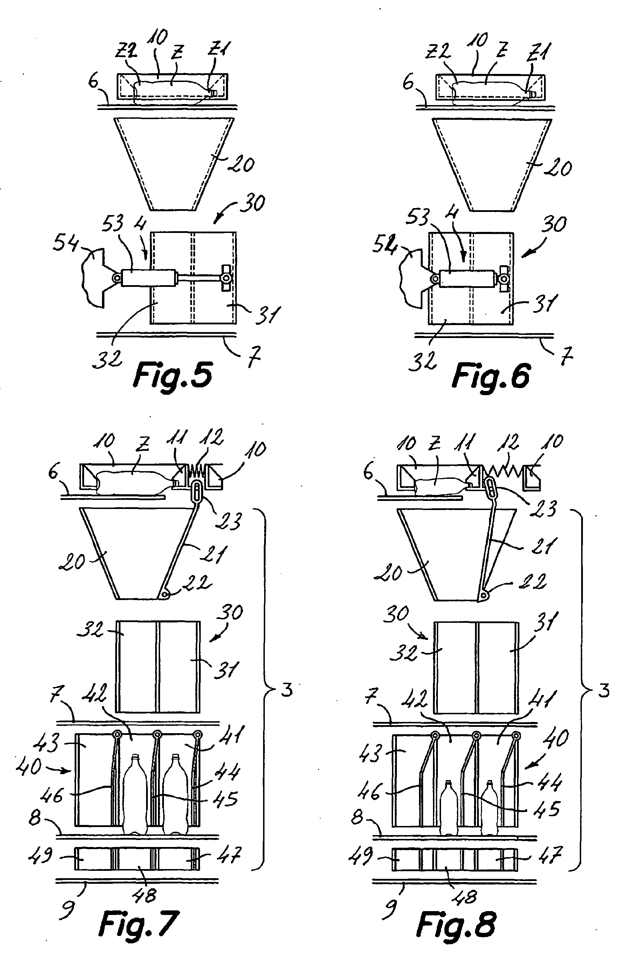

Figs. 5 and 6 show the drive means 4, which, in the illustrated exemplary embodiment, comprise at least one fluidodynamic cylinder 53 connected at one end to a rear part of the intermediate portion 30 and by the other end to a part 54 of the rotating structure. Control means are adapted to independently control the fluidodynamic cylinder 53 associated with each intermediate portion 30 in order to produce the movements of the same in accordance with the above-described stages. In Fig. 5, the fluidodynamic cylinder 53 has extended its spindle to face the upper aperture of the second conduit 32 to the lower aperture of the upper portion 20 (see the description of stage B with reference to Fig. 3). In Fig. 6, the fluidodynamic cylinder 53 has retracted its spindle to face the upper aperture of the first conduit 31 to the lower aperture of the upper portion 20 (see the description of stage E with reference to Fig. 4).

However, although not illustrated, other drive means are possible. For example, when a rocking movement is required with intermediate stops, the drive means can comprise a set of two or more fluidodynamic cylinders associated with each intermediate portion 30 and the control means can control each of the fluidodynamic cylinders in the set independently of the fluidodynamic cylinders in the other sets associated with the other intermediate portions 30. In any construction employing one or more fluidodynamic cylinders, it may be advantageous to also use a mechanical movement transmission for each intermediate portion 30 for available space conditions. It would also be possible to eventually provide the drive means in the form of at least one electric motor, with a mechanical movement transmission associated with each intermediate portion 30. This electric motor would be independently controlled by the control means to produce the cited rocking movement with or without intermediate stops.

In another exemplary embodiment, said drive means for the intermediate portions comprise at least one stationary cam profile, fixed to a machine bed and at least one cam follower associated with each intermediate portion 30. The cam follower has a configuration adapted to force, via the cam follower, the intermediate portion 30 to make the required movements in accordance with the positions of the interruptions of the support planes etc.

In relation to Figs. 7 and 8, the means to adapt the machine to articles Z of various sizes are described. Thus, the housings 10 and their corresponding upper access portions 20 comprise at least respective lateral moving parts 11, 21, coupled together and susceptible to be changed in position to adapt the housings 10 and upper portions 20 to articles Z of different sizes. The lateral moving part 11 of housing 10 is mounted in such a way that it can be forced to make movements to enlarge or reduce the longitudinal dimension of housing 10. The lateral moving part 21 of the upper portion 20 is articulated at its lower end 22 and is moved by its coupling by means of a sliding articulation 23 with respect to the lateral moving part 11 of housing 10. A bellows 12 is fitted to cover a separation space created by the movement of the lateral moving part 11 of the housing 10 with respect to the adjacent housing 10.

The lower portions 40 comprise at least one lateral moving part 44, 45, 46 associated with each compartment 41, 42, 43. Each lateral moving part 44, 45, 46 preferably comprises a wall that moves parallel to the walls of the respective compartment 41, 42, 43 and an articulated tilting part by the upper end and coupled by the lower end to its corresponding parallel movement wall. In the case in which the lower supplements 47, 48, 49 of the compartments 41, 42, 43 are present, said lateral moving parts 44, 45, 46 also preferably have corresponding supplements to the same. The lateral moving parts 44, 45, 46 are susceptible to changing position to adapt the lower portions 40 to articles Z of various sizes. If considered necessary, the intermediate portions 30 can also have equivalent moving parts (not shown) associated with the conduits 31, 32. Advantageously, all lateral moving parts 11, 21, 44, 45, 46 associated with all the housings 10, upper portions 20 and lower portions 40 can be moved at the same time by a simple manually operated mechanism that includes, for example, one or more rotating rings along the length of the machine to which mechanisms associated with the various moving parts are connected.

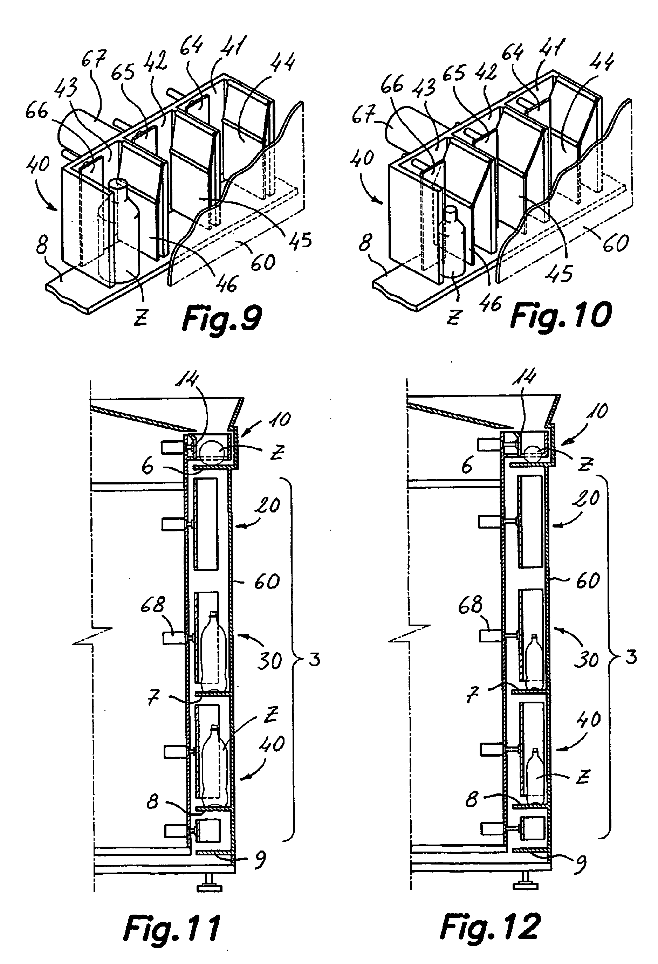

Figs. 9 and 10 show an embodiment variant in which the lower portions 40 also comprise at least one interior moving part 64, 65, 66 associated with each compartment 41, 42, 43, with said interior moving parts 64, 65, 66 susceptible to being changed in position to adapt the lower portions 40 to the articles Z of various sizes. The mentioned position change can be manually performed or by a drive device, such as a fluidodynamic cylinder 67.

The interior moving parts 64, 65, 66 can have a reduced width in order not to interfere with the mentioned lateral moving parts 44, 45, 46.

Figs. 11 and 12 show another embodiment variant in which the housings 10 have corresponding interior moving parts 14, similar to those described in relation to Figs. 9 and 10, and upper portions 20, intermediate portions 30 and lower portions 40 form respective moving assemblies susceptible to being changed in position to adapt to articles Z of various sizes. The lateral walls of said moving assemblies have reduced depth to allow the movement of the assemblies without interfering with an external static enclosure wall 60. The movement of the assemblies of the upper portions 20, intermediate portions 30 and lower portions 40 can be performed manually and individually or jointly, for example by a cam mechanism, or can be performed by one or more drive devices, such as fluidodynamic cylinders 68.

Although the present invention has been described and illustrated by means of specific exemplary embodiments, the scope of the invention is not limited to the same, but instead is defined by the attached claims.

## Claims

1. An article-positioning machine of the type comprising means to collect the articles (Z) in a plurality of individual housings (10) moving in a closed circuit having at least one drop zone (2a, 2b, 2c), means to allow each article (Z) to drop suitably orientated at said at least one drop zone (2a, 2b, 2c) inside a corresponding alignment conduit (3) moved together with each housing (10), and exit means to extract the orientated and aligned articles (Z) from said alignment conduits (3) onto an exit conveyor, **characterised in that** each alignment conduit (3) comprises an upper portion (20) for collecting the article (Z) from the corresponding housing (10), at least one moving intermediate portion (30) defining at least one conduit (31, 32) and a lower portion (40) for receiving the articles (Z) comprising at least two compartments (41, 42, 43), a stationary support plane (7) being provided interposed between said intermediate portions (30) and lower portions (40), drive means (4) being provided to individually and selectively move each intermediate portion (30) in order to face said conduit (31, 32) with the upper portion (20) and receive an article (Z) from the same, and/or face the conduit (31, 32) with one or the other of said at least two compartments (41, 42, 43) of the lower portion (40) to transfer said article (Z) to the same via at least one interruption (5a, 5b) existing in said support plane (7).

2. A machine in accordance with claim 1, **characterised in that** said selective movement of the intermediate portion (30) is a return movement with stops at the ends of travel and without intermediate stops, each stop determining at least one of the cited facings of cited at least one conduit (31, 32).

3. A machine in accordance with claim 2, **characterised in that** said intermediate portion (30) comprises two adjacent conduits (31, 32), said lower portion (40) comprises three adjacent compartments (41, 42, 43) and the support plane (7) comprises at least two interruptions (5a, 5b).

4. A machine in accordance with claim 1, **characterised in that** said selective movement of the intermediate portion (30) is a two-way movement transversal to the drop direction of the articles (Z) along the alignment conduit (3) with stops at the ends of travel and at least one intermediate stop, each stop determining at least one of the cited facings of at least one conduit (31, 32).

5. A machine in accordance with claim 4, **characterised in that** said intermediate portion (30) comprises three adjacent conduits (31, 32) and said lower portion (40) comprises four or five adjacent compartments (41, 42, 43) and the support plane (7) comprises at least two interruptions (5a, 5b).

6. A machine in accordance with claim 1, **characterised in that** said intermediate portion (30) defines a single conduit (31, 32) and articulates with the lower end of the upper portion (20), with said selective movement of the intermediate portion (30) being a pendular motion with stops at least at the ends of travel, each stop determining at least one of the cited facings of the conduit (31, 32) with one of the compartments (41, 42, 43) while constantly maintaining the cited facing with the upper portion (20).

7. A machine in accordance with any of the previous claims, **characterised in that** said closed circuit is a circular or elliptical circuit and comprises as many drop zones (2a, 2b, 2c) as there are compartments (41, 42, 43) in the lower portion (40).

8. A machine in accordance with claim 1, **characterised in that** said drive means (4) comprise at least one fluidodynamic cylinder associated with each intermediate portion (30) and independently controlled by control means.

9. A machine in accordance with claim 4, **characterised in that** said drive means (4) comprise at least one set of two fluidodynamic cylinders associated with each intermediate portion (30) and independently controlled by control means.

10. A machine in accordance with claim 8 or 9, **characterised in that** said drive means (4) also comprise a mechanical movement transmission for each intermediate portion (30).

11. A machine in accordance with claim 1 or 4, **characterised in that** said drive means (4) comprise at least one electric motor associated with each intermediate portion (30) and independently controlled by control means.

12. A machine in accordance with claim 1 or 4, **characterised in that** said drive means (4) comprise at least one electric motor and a mechanical movement transmission associated with each intermediate portion (30) with said electric motor independently controlled by control means.

13. A machine in accordance with claim 1, **characterised in that** said drive means (4) comprise at least one stationary cam profile fixed to a machine bed and at least one cam follower associated with each intermediate portion (30)

14. A machine in accordance with claim 1, **characterised in that** said housings (10) are adapted to collect the articles (Z) in a horizontal and pre-orientated position.

15. A machine in accordance with claim 1, **characterised in that** said housings (10) and their corresponding upper access portions (20) comprise respective lateral moving parts (11, 21) coupled together and susceptible to being changed position to adapt the housings (10) and upper portions (20) to articles (Z) of different sizes.

16. A machine in accordance with claim 15, **characterised in that** said housings (10) and/or their corresponding upper portions (20) also comprise respective interior moving parts (14) susceptible to being changed position to adapt the housings (10) and upper portions (20) to articles (Z) of different sizes.

17. A machine in accordance with claim 1, **characterised in that** said lower portions (40) comprise at least one lateral moving part (44, 45, 46) associated with each compartment (41, 42, 43), with said lateral moving part (44, 45, 46) susceptible to being changed position to adapt the lower portions (40) to articles (Z) of different sizes.

18. A machine in accordance with claim 17, **characterised in that** said lower portions (40) also comprise at least one interior moving part (64, 65, 66) associated with each compartment (41, 42, 43), with said lateral moving parts (64, 65, 66) susceptible to being changed position to adapt the lower portions (40) to articles (Z) of different sizes.

19. A machine in accordance with claim 1, **characterised in that** said upper portions (20) and/or intermediate portions (30) and/or lower portions (40) form respective moving assemblies susceptible to being changed position to adapt the upper (20) and/or intermediate (30) and/or lower (40) portions to articles (Z) of different sizes.

## Patentansprüche

1. Artikelpositioniermaschine mit Mitteln zur Aufnahme der Artikel (Z) in mehreren Einzelgehäusen (10), die in einem geschlossenen Kreislauf umlaufen, mit mindestens einem Fallbereich (2a, 2b, 2c), Mitteln, mit denen jeder Artikel (Z) entsprechend ausgerichtet in mindestens einen Fallbereich (2a, 2b, 2c) innerhalb eines entsprechenden Ausrichtungskanals (3), der zusammen mit jedem Gehäuse (10) verfahren wird, fallen gelassen werden kann, sowie Abziehmittel zur Entnahme der orientierten und ausgerichteten Artikel (Z) aus den Ausrichtungskanälen (3) und Ablegen auf einem Abziehband, **dadurch gekennzeichnet, dass** die Ausrichtungskanäle (3) jeweils einen oberen Abschnitt (20) zur Aufnahme des Artikels (Z) aus dem entsprechenden Gehäuse (10), mindestens einen beweglichen Zwischenabschnitt (30), mit dem mindestens ein Kanal (31, 32) definiert ist, sowie einen unteren Abschnitt (40) zur Aufnahme der Artikel (Z) mit mindestens zwei Kammern (41, 42, 43) aufweisen, wobei eine feststehende Trägerebene (7) zwischen dem Zwischenabschnitt (30) und dem unteren Abschnitt (40) sowie Antriebsmittel (4) zur individuellen und gezielten Bewegung des jeweiligen Zwischenabschnitts (30) vorgesehen sind, die so angeordnet sind, dass der Kanal (31, 32) dem oberen Abschnitt (20) gegenüberliegt und von diesem einen Artikel (Z) aufnehmen kann, und/oder der Kanal (31, 32) einer der zumindest zwei Kammern (41, 42, 43) des unteren Abschnitts (40) gegenüberliegt, um den Artikel (Z) an diesen über mindestens eine in der Trägerebene (7) vorhandene Unterbrechung (5a, 5b) zu übergeben.

2. Maschine nach Anspruch 1, **dadurch gekennzeichnet, dass** es sich bei der gezielten Bewegung des Zwischenabschnitts (30) um eine Umkehrbewegung mit Anschlägen an den Endlagen und ohne Zwischenanschläge handelt, wobei durch jeden Anschlag zumindest eine der Stellungen bestimmt wird, bei denen der zumindest eine Kanal (31, 32) den jeweiligen Abschnitten gegenüberliegt.

3. Maschine nach Anspruch 2, **dadurch gekennzeichnet, dass** der Zwischenabschnitt (30) zwei benachbarte Kanäle (31, 32), der untere Abschnitt (40) drei benachbarte Kammern (41, 42, 43) und die Trägerebene (7) mindestens zwei Unterbrechungen (5a, 5b) aufweisen.

4. Maschine nach Anspruch 1, **dadurch gekennzeichnet, dass** es sich bei der gezielten Bewegung des Zwischenabschnitts (30) um eine Zweiwegebewegung handelt, die quer zur Fallrichtung der Artikel (Z) entlang des Ausrichtungskanals (3) mit Anschlägen an den Endlagen und mindestens einem Zwischenanschlag erfolgt, wobei durch jeden Anschlag zumindest eine der Stellungen bestimmt wird, bei denen der zumindest eine Kanal (31, 32) den jeweiligen Abschnitten gegenüberliegt.

5. Maschine nach Anspruch 4, **dadurch gekennzeichnet, dass** der Zwischenabschnitt (30) drei benachbarte Kanäle (31, 32), der untere Abschnitt (40) vier bzw. fünf benachbarte Kammern (41, 42, 43) und die Trägerebene (7) mindestens zwei Unterbrechungen (5a, 5b) aufweisen.

6. Maschine nach Anspruch 1, **dadurch gekennzeichnet, dass** der Zwischenabschnitt (30) einen Einzelkanal (31, 32) definiert und mit dem unteren Ende des oberen Abschnitts (20) gelenkverbunden ist, wobei es sich bei der gezielten Bewegung des Zwischenabschnitts (30) um eine Pendelbewegung mit Anschlägen zumindest an den Endlagen handelt, wobei durch jeden Anschlag zumindest eine der Stellungen bestimmt wird, bei denen der zumindest eine Kanal (31, 32) einer der Kammern (41, 42, 43) und gleichzeitig weiterhin stets dem oberen Abschnitt (20) gegenüberliegt.

7. Maschine nach einem der vorhergehenden Ansprüche, **dadurch gekennzeichnet, dass** es sich bei dem geschlossenen Kreislauf um einen kreisförmigen oder elliptischen Kreislauf handelt, der so viele Fallbereiche (2a, 2b, 2c) aufweist, wie Kammern (41, 42, 43) im unteren Abschnitt (40) vorhanden sind.

8. Maschine nach Anspruch 1, **dadurch gekennzeichnet, dass** die Antriebsmittel (4) mindestens einen flüssigkeitsdynamischen Zylinder aufweisen, der mit jedem Zwischenabschnitt (30) verbunden ist und durch Steuermittel unabhängig gesteuert wird.

9. Maschine nach Anspruch 4, **dadurch gekennzeichnet, dass** die Antriebsmittel (4) mindestens einen Satz zweier flüssigkeitsdynamischer Zylinder aufweisen, die mit jedem Zwischenabschnitt (30) verbunden sind und durch Steuermittel unabhängig gesteuert werden.

10. Maschine nach Anspruch 8 oder 9, **dadurch gekennzeichnet, dass** die Antriebsmittel (4) ebenfalls eine mechanische Bewegungsübertragung für jeden Zwischenabschnitt (30) aufweisen.

11. Maschine nach Anspruch 1 oder 4, **dadurch gekennzeichnet, dass** die Antriebsmittel (4) mindestens einen Elektromotor aufweisen, der mit jedem Zwischenabschnitt (30) verbunden ist und durch Steuermittel unabhängig gesteuert wird.

12. Maschine nach Anspruch 1 oder 4, **dadurch gekennzeichnet, dass** die Antriebsmittel (4) mindestens einen Elektromotor sowie eine mechanische Bewegungsübertragung aufweisen, die mit jedem Zwischenabschnitt (30) verbunden sind, wobei der Elektromotor unabhängig durch Steuermittel gesteuert wird.

13. Maschine nach Anspruch 1, **dadurch gekennzeichnet, dass** die Antriebsmittel (4) mindestens ein feststehendes Nockenprofil, das an einem Maschinebett befestigt ist, und mindestens ein Nockenstößel aufweisen, der mit jedem Zwischenabschnitt (30) verbunden ist.

14. Maschine nach Anspruch 1, **dadurch gekennzeichnet, dass** die Gehäuse (10) zur Aufnahme der Artikel (Z) in horizontaler und vorausgerichteter Stellung geeignet sind.

15. Maschine nach Anspruch 1, **dadurch gekennzeichnet, dass** die Gehäuse (10) und deren entsprechenden oberen Zugangsabschnitte (20) jeweils bewegliche Seitenteile (11, 21) aufweisen, die miteinander gekoppelt sind und in ihrer Stellung verändert werden können, um die Gehäuse (10) und oberen Abschnitte (20) an Artikel (Z) verschiedener Größe anzupassen.

16. Maschine nach Anspruch 15, **dadurch gekennzeichnet, dass** die Gehäuse (10) und/oder deren entsprechenden oberen Abschnitte (20) ebenfalls jeweils bewegliche Innenteile (14) aufweisen, die in ihrer Stellung verändert werden können, um die Gehäuse (10) und oberen Abschnitte (20) an Artikel (Z) verschiedener Größe anzupassen.

17. Maschine nach Anspruch 1, **dadurch gekennzeichnet, dass** die unteren Abschnitte (40) mindestens ein bewegliches Seitenteil (44, 45, 46) aufweisen, das mit jeder Kammer (41, 42, 43) verbunden ist, wobei das bewegliche Seitenteil (44, 45, 46) in seiner Stellung verändert werden kann, um die unteren Abschnitte (40) an Artikel (Z) verschiedener Größe anzupassen.

18. Maschine nach Anspruch 17, **dadurch gekennzeichnet, dass** die unteren Abschnitte (40) ebenfalls mindestens ein bewegliches Innenteil (64, 65, 66) aufweisen, das mit jeder Kammer (41, 42, 43) verbunden ist, wobei die beweglichen Innenteile (64, 65, 66) in ihrer Stellung verändert werden können, um die unteren Abschnitte (40) an Artikel (Z) verschiedener Größe anzupassen.

19. Maschine nach Anspruch 1, **dadurch gekennzeichnet, dass** die oberen Abschnitte (20) und/oder Zwischenabschnitte (30) und/oder unteren Abschnitte (40) jeweils bewegliche Strukturen bilden, die in ihrer Stellung verändert werden können, um die oberen Abschnitte (20) und/oder Zwischenabschnitte (30) und/oder unteren Abschnitte (40) an Artikel (Z) verschiedener Größe anzupassen.

## Revendications

1. Une machine pour positionner des articles du genre comportant des moyens pour recueillir les articles (Z) dans une pluralité de cases individuelles (10) se déplaçant en circuit fermé, ayant au moins une région de chute (2a, 2b, 2c), des moyens pour permettre que chaque article (Z) tombe orienté de façon appropriée à cette au moins une région de chute (2a, 2b, 2c) à l'intérieur d'un conduit d'alignement correspondant (3) qui se déplace en même temps que chaque case (10) et des moyens de sortie pour extraire les articles orientés et alignés (Z) de ces conduits d'alignement (3) dans un convoyeur de sortie, **caractérisée en ce que** chaque conduit d'alignement (3) comporte une portion supérieure (20) pour recueillir l'article (Z) de la case correspondante (10), au moins une portion intermédiaire mobile (30) définissant au moins un conduit (31, 32) et une portion inférieure (40) pour recevoir les articles (Z) comportant au moins deux compartiments (41, 42, 43), un plan de support fixe (7) étant prévu, interposé entre ces portions intermédiaires (30) et ces portions inférieures (40), des moyens d'entraînement (4) ayant été prévus pour déplacer individuellement et sélectivement chaque portion intermédiaire (30) afin de la placer en regard de ce conduit (31, 32) avec la portion supérieure (20) et recevoir un article (Z) de celui-ci et/ou être en regard du conduit (31, 32) avec l'un ou l'autre de ces au moins deux compartiments (41, 42, 43) de la portion inférieure (40) pour transférer cet article (Z) vers celui-ci par le biais d'au moins une interruption (5a, 5b) existant sur ce plan de support (7).

2. - Une machine conformément à la revendication 1, **caractérisée en ce que** ce mouvement sélectif de la portion intermédiaire (30) est un mouvement de retour avec des arrêts aux fins de course et sans arrêts intermédiaires, chaque arrêt déterminant au moins une de ces positions en regard d'au moins un conduit (31, 32).

3. - Une machine conformément à la revendication 2, **caractérisée en ce que** cette portion intermédiaire (30) comporte deux conduits adjacents (31, 32), cette portion inférieure (40) comporte trois compartiments adjacents (41, 42, 43) et le plan de support (7) comporte au moins deux interruptions (5a, 5b).

4. - Une machine conformément à la revendication 1, **caractérisée en ce que** ce mouvement sélectif de la portion intermédiaire (30) est un mouvement en deux sens, transversal à la direction de chute des articles (Z) le long du conduit d'alignement (3) qui s'arrête aux fins de course et au moins un arrêt intermédiaire, chaque arrêt déterminant au moins une de ces positions en regard d'au moins un conduit (31, 32).

5. - Une machine conformément à la revendication 4, **caractérisée en ce que** cette portion intermédiaire (30) comporte trois conduits adjacents (31, 32) et cette portion inférieure (40) comporte quatre ou cinq compartiments adjacents (41, 42, 43) et le plan de support (7) comporte au moins deux interruptions (5a,5b).

6. - Une machine conformément à la revendication 1, **caractérisée en ce que** cette portion intermédiaire (30) définit un seul conduit (31, 32) et est articulée avec l'extrémité inférieure de la portion supérieure (20), ce mouvement sélectif de la portion intermédiaire (30) étant un mouvement pendulaire qui s'arrête au moins aux fins de course, chaque arrêt délimitant au moins une de ces positions en regard du conduit (31, 32) un des compartiments (41, 42, 43) restant constamment en regard de la portion supérieure (20).

7. - Une machine conformément à une quelconque des revendications précédentes, **caractérisée en ce que** ce circuit fermé est un circuit circulaire ou elliptique et comporte autant de régions de chute (2a, 2b, 2c) qu'il existe de compartiments (41, 42, 43) dans la portion inférieure (40).

8. - Une machine conformément à la revendication 1 **caractérisée en ce que** ces moyens d'entraînement (4) comporte au moins un cylindre hydrodynamique relié à chaque portion intermédiaire (30) et contrôlé indépendamment par des moyens de contrôle.

9. - Une machine conformément à la revendication 4, **caractérisée en ce que** ces moyens d'entraînement (4) comportent au moins un jeu de deux cylindres hydrodynamiques reliés à chaque portion intermédiaire (30) et contrôlé indépendamment par des moyens de contrôle.

10. - Une machine conformément à la revendication 8 ou 9 **caractérisée en ce que** ces moyens d'entraînement (4) comportent également une transmission à mouvement mécanique pour cette portion intermédiaire (30).

11. - Une machine conformément à la revendication 1 ou 4, **caractérisée en ce que** ces moyens d'entraînement (4) comportent au moins un moteur électrique relié à chaque portion intermédiaire (30) et contrôlé indépendamment par des moyens de contrôle.

12. - Une machine conformément à la revendication 1 ou 4, **caractérisée en ce que** ces moyens d'entraînement (4) comportent au moins un moteur électrique et une transmission à mouvement mécanique reliée à chaque portion intermédiaire (30) ce moteur électrique étant indépendamment contrôlé par des moyens de contrôle.

13. - Une machine conformément à la revendication 1, **caractérisée en ce que** ces moyens entraînement (4) comportent au moins un profil à cames fixe fixé à une base de machine et à au moins un suiveur de cames relié à chaque portion intermédiaire (30).

14. - Une machine conformément à la revendication 1, **caractérisée en ce que** ces cases (10) sont adaptées pour recueillir les articles (Z) en une position horizontale préorientée.

15. - Une machine conformément à la revendication 1, **caractérisée en ce que** ces cases (10) et leurs portions d'accès supérieures correspondantes (20) comportent des pièces mobiles latérales respectives (11, 21) couplées ensemble et susceptibles d'être changées de position pour adapter les cases (10) et les portions supérieures (20) aux articles (Z) à tailles différentes.

16. - Une machine conformément à la revendication 15, **caractérisée en ce que** ces cases (10) et/ou leurs portions supérieures correspondantes (20) comprennent des pièces mobiles intérieures respectives (14) susceptibles de changer de position pour adapter les cases (10) et les portions supérieures (20) aux articles (Z) à tailles différentes.

17. - Une machine conformément à la revendication 1, **caractérisée en ce que** ces portions inférieures (40) comportent au moins une pièce mobile latérale (44, 45, 46) reliée à chaque compartiment (41, 42, 43), cette pièce mobile latérale (44, 45, 46) étant susceptible de changer de position pour adapter les portions inférieures (40) aux articles (Z) à tailles différentes.

18. - Une machine conformément à la revendication 17, **caractérisée en ce que** ces portions inférieures (40) comportent aussi au moins une pièce mobile intérieure (64, 65, 66) reliée à chaque compartiment (41, 42, 43), ces pièces mobiles intérieures (64, 65, 66) étant susceptibles de changer de position pour adapter les portions inférieures (40) à des articles (Z) à tailles différentes.

19. - Une machine conformément à la revendication 1, **caractérisée en ce que** ces portions supérieures (20) et/ou portions intermédiaires (30) et/ou des portions inférieures (40) forment des ensembles mobiles respectifs susceptibles de changer de position pour adapter les portions supérieures (20) et/ou intermédiaires (30) et/ou inférieures (40) aux articles (Z) à tailles différentes.
